Europäisches Patentamt

European Patent Office

Office européen des brevets

(11) Publication number: 0 380 816
A1

# EUROPEAN PATENT APPLICATION

(21) Application number: 89200212.2

(51) Int. Cl.5: G07F 9/10

(22) Date of filing: 01.02.89

(43) Date of publication of application:
08.08.90 Bulletin 90/32

(84) Designated Contracting States:
AT BE CH DE ES FR GB GR LI LU NL SE

(71) Applicant: C.T.A. S.a.s. di CONCA G. & C.
Via Fabio Filzi, 19
I-22063 Cantu' (Como)(IT)

(72) Inventor: Conca, Gianfranco
Via Domokos, 4
I-20147 Milano(IT)
Inventor: Giacoppo, Giovanni
Via Cassia, 1172
I-00189 Roma(IT)

(74) Representative: Riccardi, Sergio
Riccardi & Co. Via Macedonio Melloni, 32
I-20129 Milano(IT)

(54) Process and machine for frying and automatic fried food dispensing.

(57) A process and a machine for frying and fried food automatic dispensing, intended for supplying the customer with food fried at the moment of request by insertion of one or more coins. The above mentioned frying process is carried out by activating a sequence of operations in order to convey the frozen food directly into high temperature oil, then into a suitable throwaway container; at the same time a bag of flavoring to be added to the fried food is dispensed.

FIG. 2

EP 0 380 816 A1

## PROCESS AND MACHINE FOR FRYING AND AUTOMATIC FRIED FOOD DISPENSING

BACKGROUND OF THE INVENTION

Field of the Invention

This invention concerns a process and a machine for frying and automatically dispensing fried food, preferably, but not necessarily food items of small size, intended for supplying the consumer with food fried at the moment of request and conveyed, after a short time, into a paper container in one or more alcoves in the front panel of the machine.

At the same time, on request, a sealed bag of additional flavoring (e.g. catsup or concentrated, aromatized tomato sauce) is dispensed.

Discussion of the Prior Art

Fried food slot machines on the market generally dispense pre-cooked food, re-heated on request by means of superheated steam or thermic radiation with resistors. This requires a very frequent supply of pre-cooked food to guarantee the consumer quality and integrity of the product.

Numerous patents have been granted which relate to the art of frying food. Common features in the prior art include means such as a basket for holding the food and means for dipping the basket into, and removing the basket from, a container of hot cooking oil.

Mariotti patent No. 4,502,372 is illustrative of the art of industrial deep-frying. Patents No. 4,722,267 to Galockin et al.; No. 3,667,372 to Sicher et al.; No. 4,457,947 to Schmidt et al.; and No. 4,586,429 to Hawkins show various arrangements for frying and dispensing food.

Despite the attention directed by those in the art to the problems involved in providing a vending machine which will produce freshly fried food products, no machine has yet gained wide acceptance. Prior art machines have been difficult to service, and the odors resulting from frying are troublesome. The vending machine of the present invention overcomes those drawbacks of the prior art.

SUMMARY OF THE INVENTION

This invention concerns a vending machine dispensing food fried at the moment of request, thus ensuring maximum quality.

After insertion of banknotes or coins, one helping of frozen food is dropped into the basket which is dipped into oil kept at constant optimal temperature.

After a very short time, e.g. about 20-60 seconds, the cooking oil is removed from the fried food by straining, the food is conveyed in a chute and dropped into a throwaway container, which has previously been dispensed in an alcove at the front of the machine.

At the moment of request, the consumer can also select a sealed bag of concentrated, aromatized flavoring which is automatically dispensed by a dispenser in the front panel of the machine.

This machine is preferably provided with two separated frying cells either for frying either identical quantities of the same food, such as chips (in this case the two cells work alternatively) or for frying two different kinds of food, according to request (e.g. one cell for fish, the other for chips).

As a guarantee of its integrity, the food is kept deep-frozen in a special container in the freezer from which it is directly dropped into frying oil.

Preferably the frying and dispensing machine of the invention is housed in a free-standing cabinet which can be placed in a location convenient for use by food purchasers. No special exhaust outlets need be provided to the exterior of a building in which the machine is located, so it can be positioned in an interior room, basement, or wherever is convenient.

The front panel of the machine can be used to display pictures and/or descriptions of the food which can be obtained, along with instructions for operating the machine. Also in the front panel, or door of the machine are slots for coins, tokens or paper money, buttons to select choices available and the aforementioned alcoves from which the purchaser removes the fried food products, as well as outlets for dispensing condiments, etc. and a coin return or change dispenser.

The front panel, or door, is hinged to be opened by service and maintenance personnel and is provided with a lock to prevent tampering. When the door is opened the food, cooking oil and other supplies such as receptacles for the food and stocks of condiments can be readily replenished.

The upper portion of the interior of the housing is occupied by a freezer compartment, wherein the food is stored and kept fresh. This compartment has a sliding drawer located behind an inner door which can be swung open so that the drawer may be pulled forward to replenish the supply of food, which in operation is dispensed downward from the drawer in measured quantities to be fried. Means are provided for controlling the quantity of food delivered to frying baskets via chutes located beneath the freezer compartment.

The baskets are movable to receive the food, for example, sliced potatoes, to dip the food into hot oil, lift out the cooked product and deliver through chutes in the front door to receptacles, such as cups, which have been dropped into place to receive the food, in synchronism with the frying operation.

The frying oil is maintained at or near a constant level in deep frying pans which have thick bottoms of metal, preferably brass, to retain heat and to keep the oil temperature at the desired cooking elevation. All of these mechanisms can be computer controlled.

There is also a condenser and filter system, using an activated carbon filter medium, for removing moisture and odors which result from frying, so that the vending machine does not exhaust any steam or undesirable aroma.

As will be more fully explained in the following detailed description of a presently preferred embodiment of the machine of the invention, all of the working parts are arranged for easy access, so that service and maintenance personnel do not need to be highly skilled or trained for any great length of time.

Brief Description of the Drawings

In the accompanying drawing figures, in which like reference characters designate like parts throughout:

Figure 1 is an overall view of a vending machine of the invention;

Figure 2 shows the machine of Figure 1 with the front door open;

Figure 3 shows the machine with interior doors opened and the freezer drawer or hopper moved forward;

Figure 4 is a more detailed view of the chutes, baskets, and fryers;

Figure 5 illustrates the frying apparatus of the invention;

Figure 6 is a front view of the interior of the machine;

Figure 7 is a side view of the machine, partially in section;

Figure 8 is a sectional side view of the machine showing the food portioning hopper;

Figure 9 illustrates the food receiving position of the frying basket;

Figure 10 shows the motion of the food basket in delivering food to a customer;

Figure 11 shows the basket in food frying position;

Figure 12 shows the food weighing balance mechanism;

Figure 13 illustrates a condenser and filter according to the invention;

Figure 14 shows an oil dispensing valve arrangement for maintaining the oil level in the frying vessels;

Figure 15 shows an oil container of the invention;

Figure 16 shows a condiment dispenser; and

Figure 17 shows a detail of the dispenser of Figure 16.

Description of Preferred Embodiment

The automatic food frying and dispensing machine of the invention, generally designated by reference numeral 10 has a free-standing cabinet or housing 11 with a hinged front panel or door 12 provided with a lock generally designated 13 to prevent tampering.

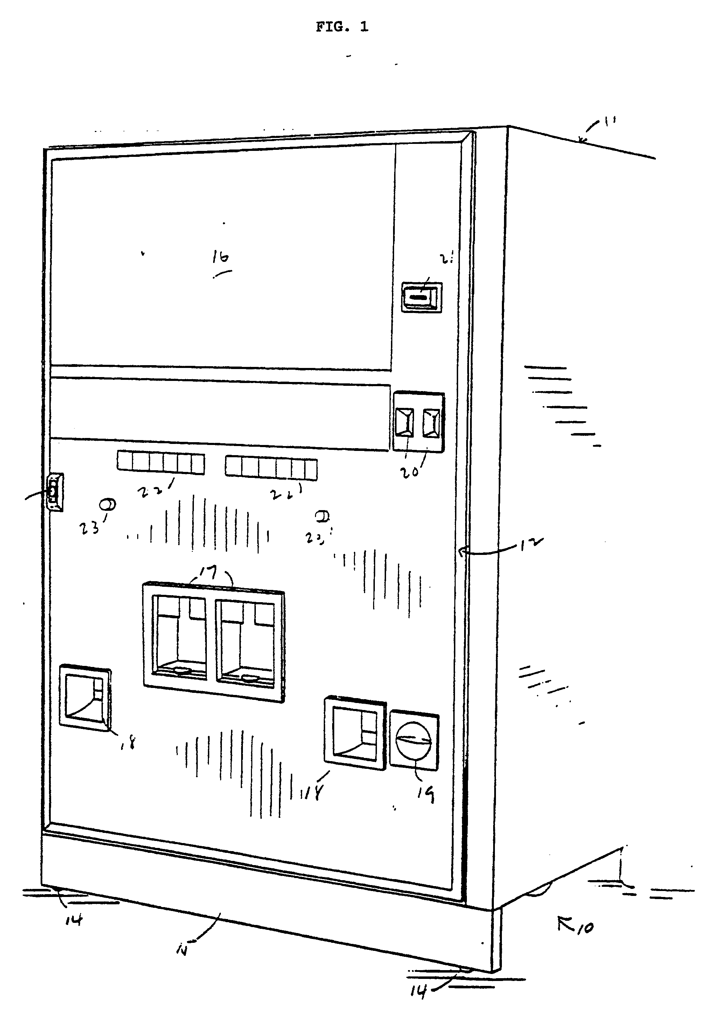

The housing 11 may have wheels or casters 14 and a front skirt panel 15 as shown in Fig. 1. An upper area 16 of the front panel 12 provides a space for the display of food which can be purchased.

Also shown in Fig. 1 are two alcoves or niches 17 into which food is dispensed, two further recesses 18 for dispensing of condiments such as catsup to accompany the food, a coin return or change dispenser 19, coin deposit slots 20, a paper currency receiving slot 21, and customer selection buttons 22, as well as buttons 23 to be pushed to exclude the dispensing of condiments.

The front panel 12 can also bear trademarks, instructions to purchasers, etc.

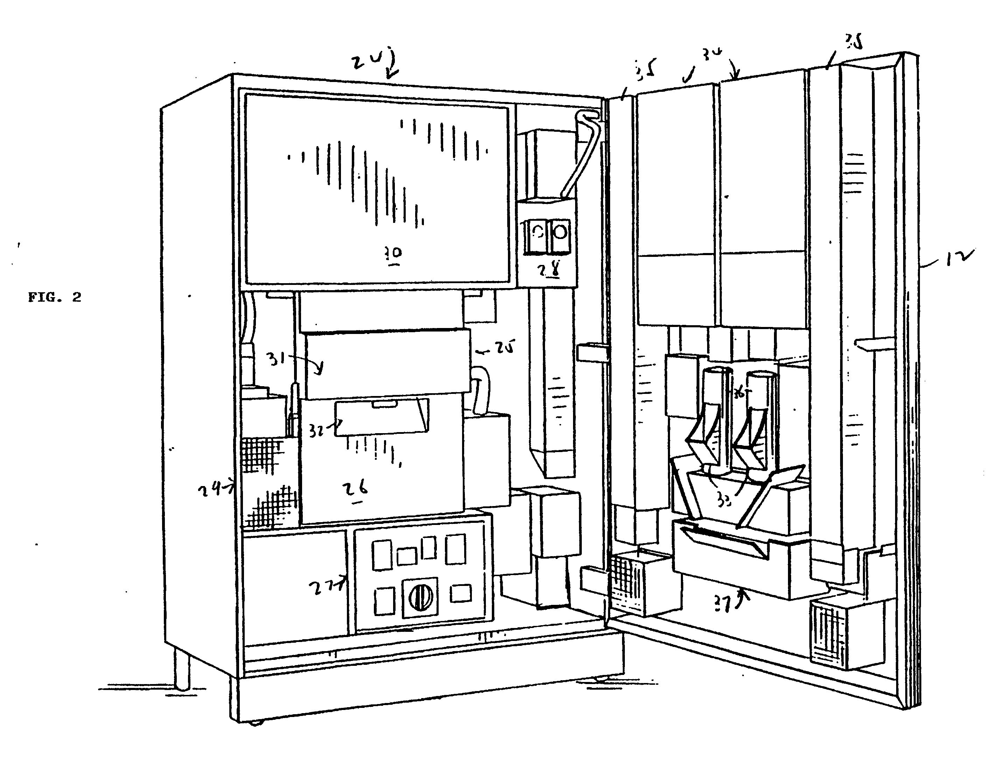

Figure 2 shows the vending machine 10 when door 12 has been opened. Generally speaking, there are located within the machine 10, a freezer area 24, a food handling zone 25, a fryer 26, computer controls 27, condenser for vapor 28, and air filter 29.

The freezer has an insulated, hinged door 30. The food handling zone and fryer are located behind the door 31 of Fig. 2 which has a portal 32 for passage of food. Chutes 33 in the machine front door 12 receive the fried food products and present them to the purchaser. Figure 2 also shows the compartments 34 in which cups or other food receptacles are kept and the housings 35 for the dispensers of condiments such as catsup. The cylindrical cup dispensing passageways 36 can also be seen in Fig. 2. There is also a receptacle 37 for food which is dropped from the cups.

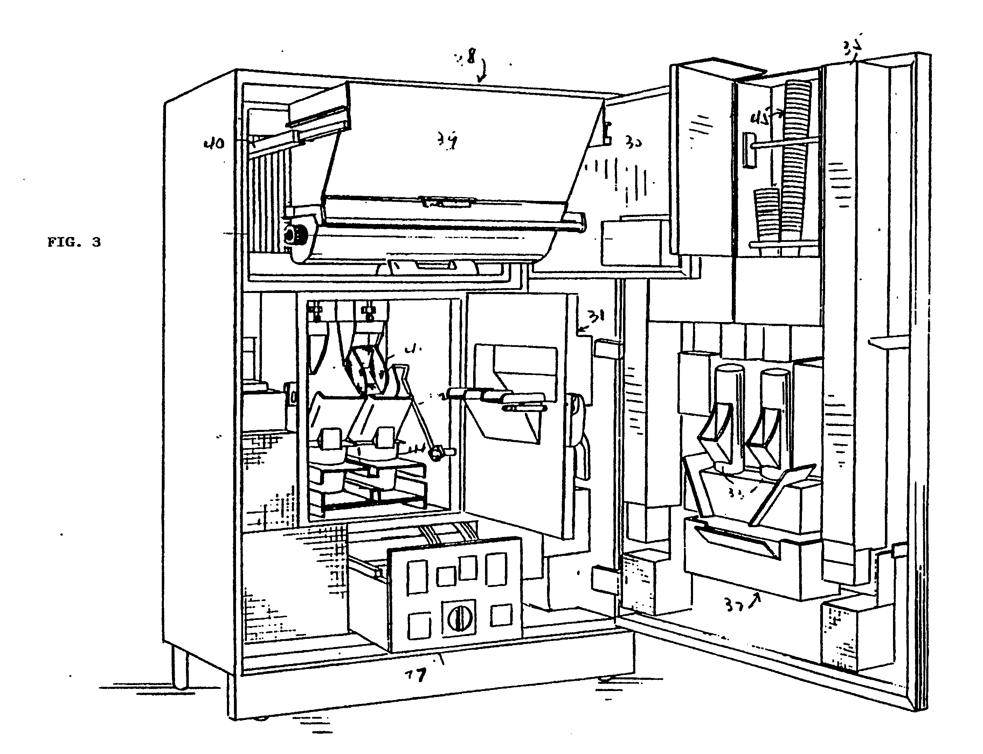

Figure 3 shows the door 30 of the freezer compartment open, so that the drawer or hopper 38, which has an inwardly and downwardly inclined front panel 39, can be pulled forward on its guide rails 40 as shown for replenishing the frozen food supply.

The front door 31 of the fryer zone is also shown in open condition in Fig. 3, revealing the interior space, in which a basket 41 and its articulated arm 42 can be seen, along with the downward and inward facing plates 43 leading to the frying vessels 44 which are located above electrical heating means to maintain frying oil at a substantially constant temperature.

The door of the cup compartment 34 is also opened in Fig. 3 to show cups 45 stored therein, and it can be seen that the electronic controls 27 are mounted in a slidable drawer which can be pulled forward for access for maintenance purposes.

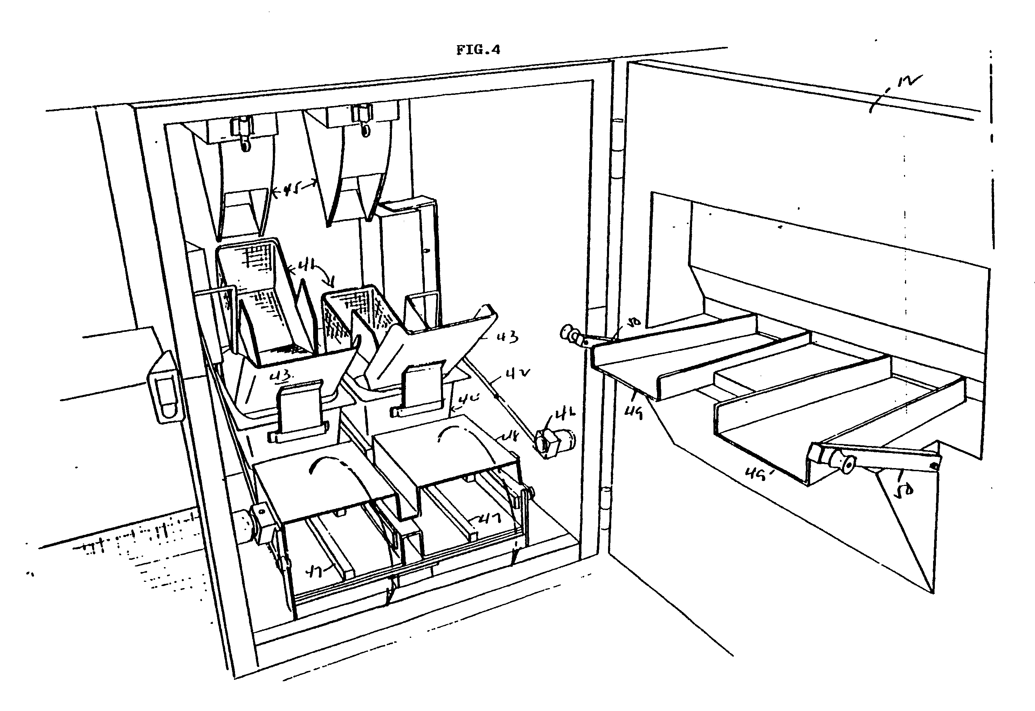

The food handling and frying arrangement in accordance with the invention is illustrated in greater detail in Figure 4. As clearly shown in Figure 4, chutes 45 extend from the bottom of the hopper 38 to the interior of the food handling zone 25 for delivery of frozen food to be fried to the baskets 41, one of which is shown in Fig. 4 in its food receiving orientation, whereas the other is being lowered into the deep fat frying vessel 44 by means of the arm 42 which is pivotably mounted on rotatable means 46. Forward of the basket locations are the slanted plates 43.

At the lower front of Fig. 4 can be seen the guide tracks 47 along which the frying vessels 44 can be slid for removal and cleaning thereof. Also shown are covers 48 which can be swung forward in the direction of the arrows. The chutes 49, mounted to tilt forward for delivery of fried food on arms 50 are shown at the rear of the front door 12 of the machine 10.

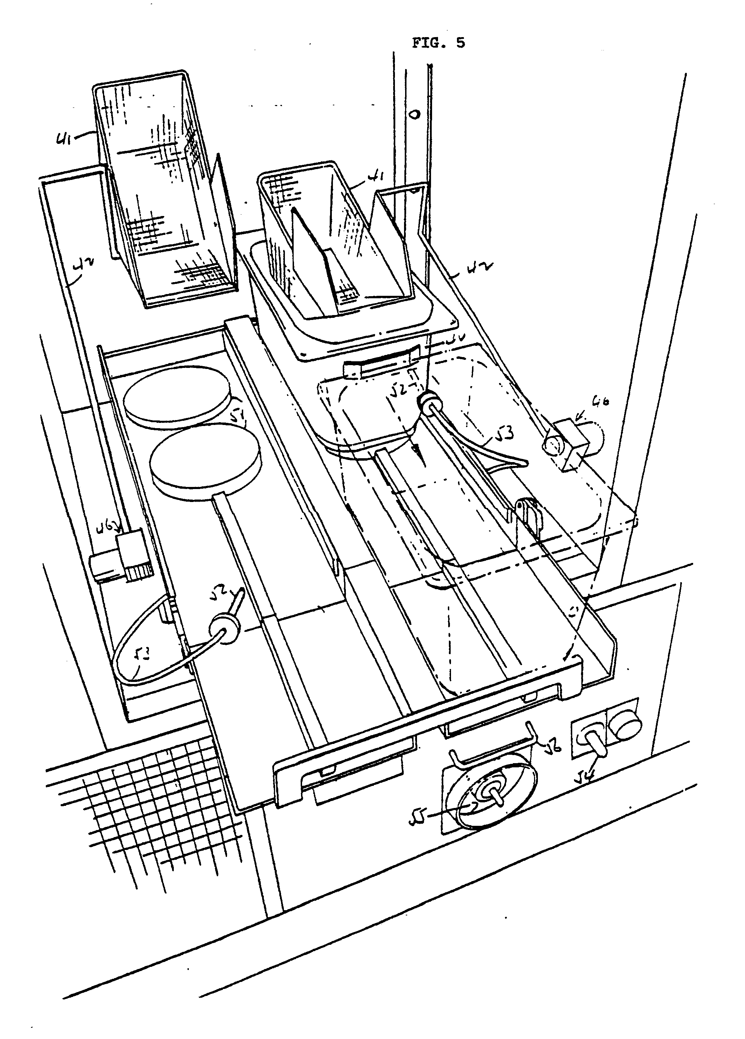

Figure 5 shows the actual frying apparatus in some detail. The baskets 41 with the pivot arms 42 are shown, and one frying vessel 44 is shown in its operational position (the other vessel 44 is removed). Dashed lines in Fig. 5 show the position of the vessel 44 when it has been slidingly moved forward in the direction of the arrow. Electric heating elements (resistance heaters) are shown at 51, and thermostat probes 52 for sensing the temperature of the frying oil are seen to be flexibly secured by electrical cables 53 so that the probes 52 can be moved between the operating condition shown at the right of the drawing to the detached position shown at the left when a vessel 44 is removed. At the lower portion of the drawing there is shown an on/off switch 54 and a temperature control 55, as well as a handle 56 for sliding the electronic control means outward and forward for inspection and/or maintenance.

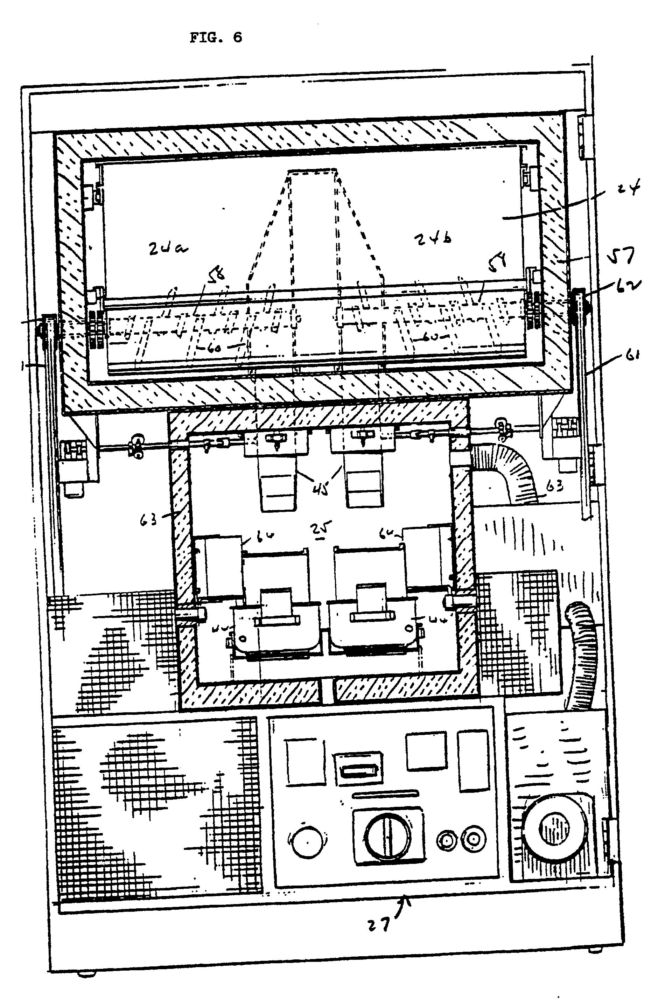

The front view of Fig. 6 shows the interior parts of the vending maching 10. As shown in Fig. 6, the freezer 24 is surrounded by insulating material 57 such as polyurethane foam or fiberglass and the interior space within the freezer is separated into two side-by-side zones 24a and 24b, in which stocks of different foods, or of the same food, can be stored. Each of the zones 24a and 24b is equipped with a rotatable impeller mechanism 58 for propelling the food, such as cut up potatoes, to the chutes 45. Each impeller mechanism 58 has a generally horizontal shaft 59 equipped with helically arranged blades 60 which can preferably be of somewhat flexible material such as a plastic material like polytetrafluoroethylene for moving the food effectively without damaging it. The shafts 58 are seen to be mounted to be driven by means of belts 61 through pulleys 62.

The food handling and frying zone 25 located centrally within the housing 11 and below the freezer 24 is also protected by insulating material as shown at 63. The insulation can be of such material as polyurethane foam, fiberglass or the like. The heated zone 25 is thus effectively isolated from the cooled area 24. The zone 25 has an exhaust conduit 63, shown as a flexible tube for removing vapor produced during frying.

Also shown in Fig. 6 are the frying vessels 44. Arranged adjacent each vessel 44 is an oil container 64 for replenishing the supply of frying oil.

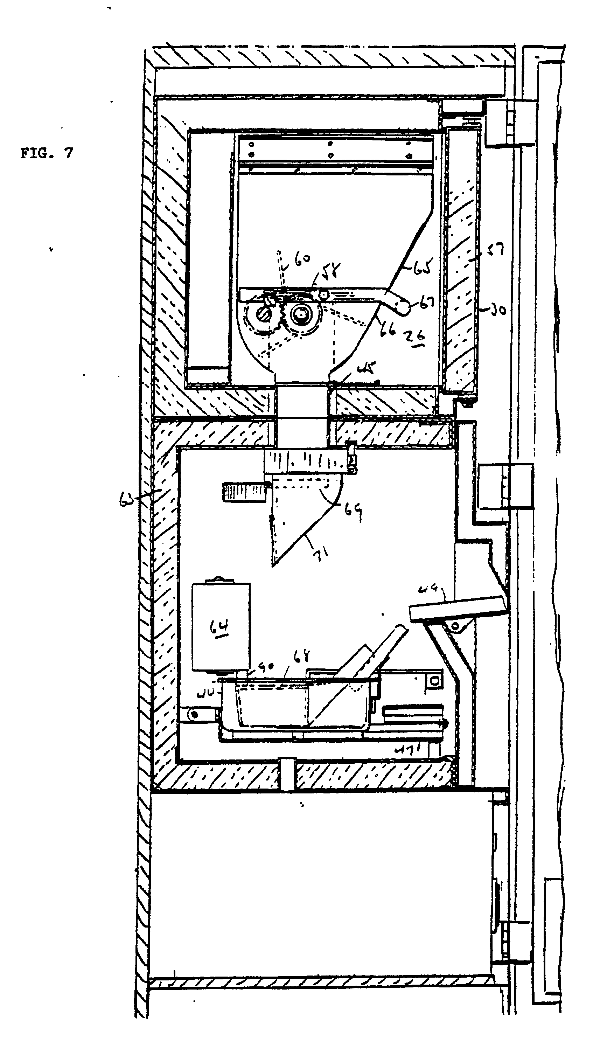

The side view of Fig. 7 shows the freezer 26 with its impeller mechanism and blades 60, which are arranged to deliver food products to the chutes 45. The freezer compartment can be seen to have a drawer 65 with an inwardly sloping front face 66. When the freezer door 30 has been opened, the drawer 65 can be pulled outwardly by means of a handle 67, so that food can be supplied thereto.

At the lower portion of Fig. 7 can be seen the frying vessel 44 mounted for sliding movement on its guide rail 47, and also oil container 64. The frying basket 68 is shown in a lowered position within the vessel 44.

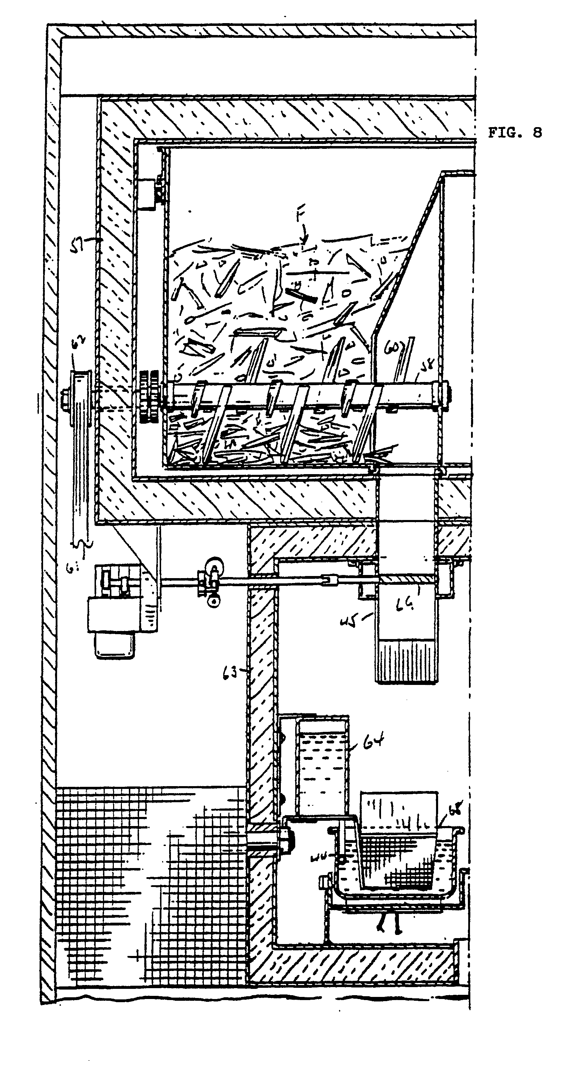

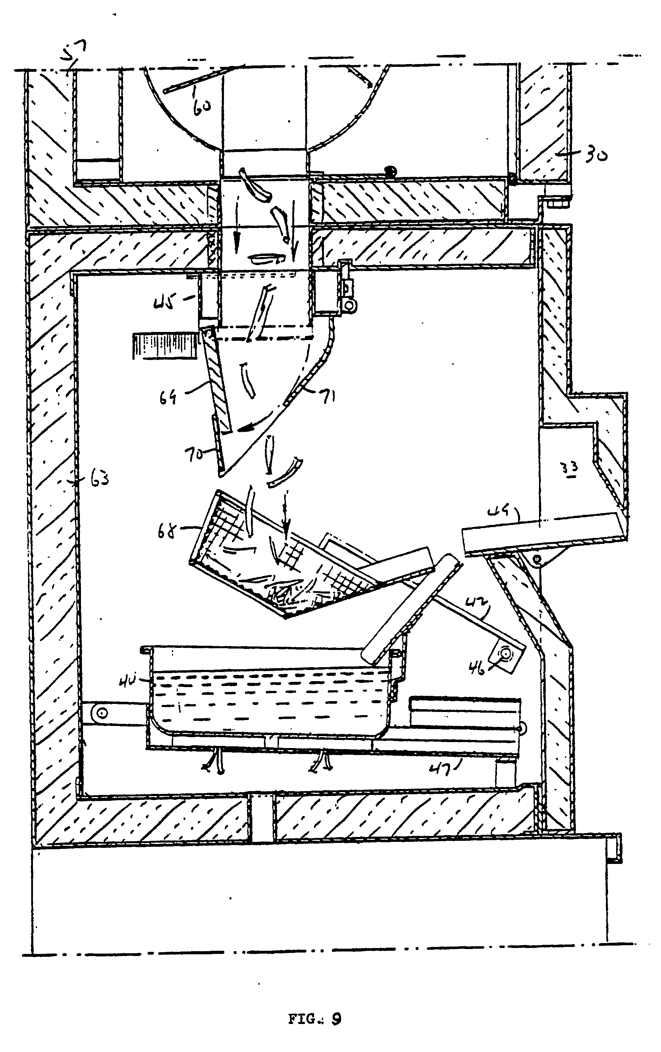

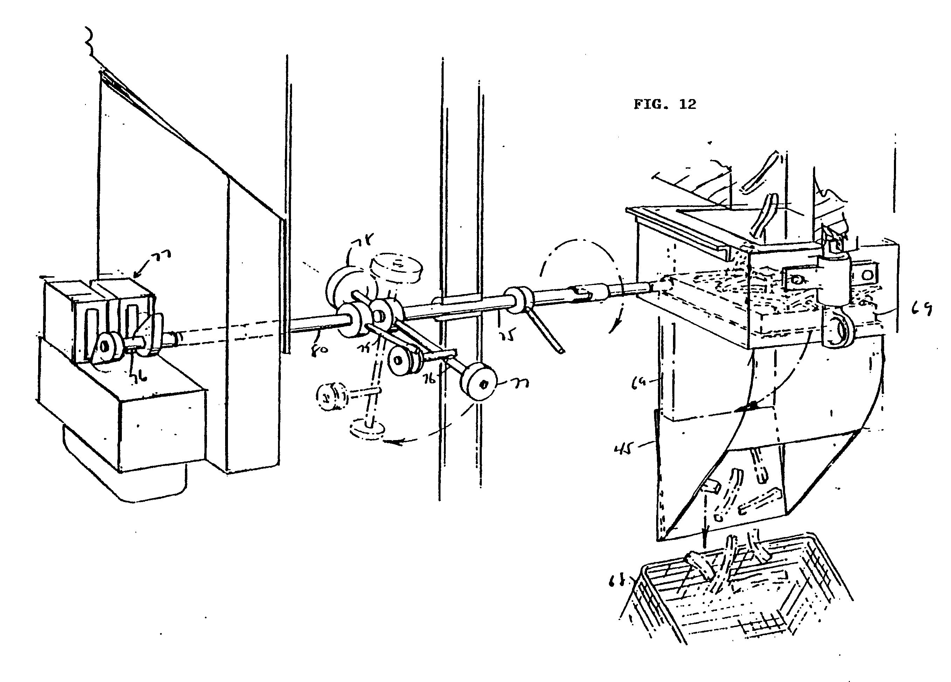

The screw conveyer effect of the impeller mechanism 58 in the freezer 26 can be understood by looking at Figs 7 and 8. Fig. 8 shows how the helical blades 60 deliver food F to the chute 45. These figures also reveal the trap-door like mechanism for dispensing a measured quantity (say 100 grams) of food to the basket 68. The door 69 is pivoted to move from the horizontal orientation illustrated in Figs. 7 and 8 to the orientation illustrated in Fig. 9 wherein the door 69 is shown in a swung down position to dispense potatoes or the like for frying into the waiting basket 68. The chute 45 has a stop 70 for the door 69 and a slanted front portion 71 to guide the food product F. Reference to Fig. 12 shows how the door 69 is counterweighted for dispensing a measured quantity of food.

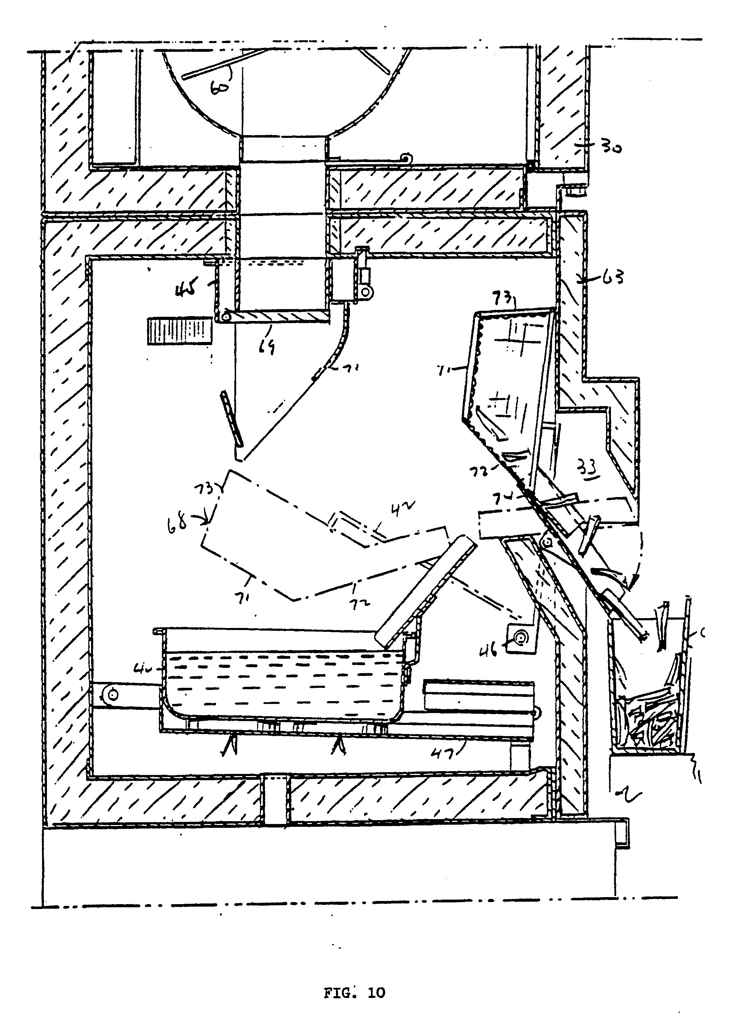

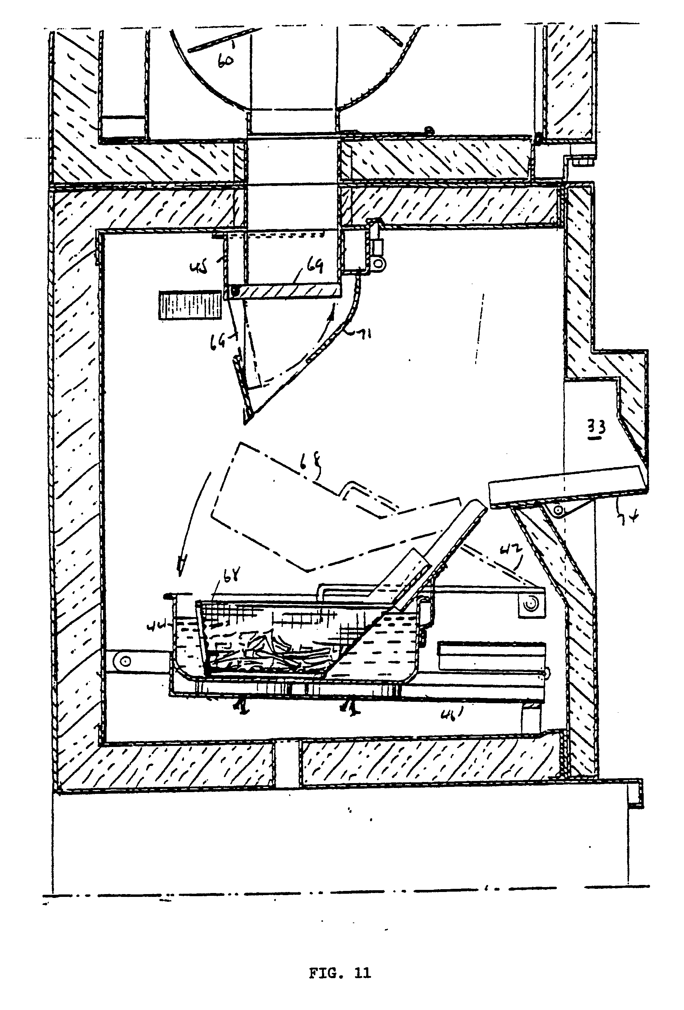

The basket 68 as shown in Fig. 9 is shown tilted upwards to receive the food from chute 45. The articulated arm 42 and basket 68 are illustrated in their other operating positions in Figs. 10 and 11. Thus Fig. 10 shows the food receiving position of basket 68 in dot and dash lines and the position assumed by the basket 68 for delivery of the fried food the the receptacle, shown as a cup C in alcove 17 through chute 33 in the machine door 12.

It can be seen that the basket 68 has a dipper-like shape, with a flat bottom 71 and outwardly slanted front and rear walls 72 and 73. The basket 68 is suitably formed of sturdy wire mesh or the like to allow oil to be drained from the fried food before the basket 68 reaches the solid-line position of Fig. 10. Fig. 10 also shows the trap-door 69 returned to its generally horizontal, closed position.

Fig. 11 illustrates the movement of the basket 68 to its frying position with the food immersed in oil in the vessel 44. Also shown is the pivotally mounted slide 74 adapted to move between the positions shown in Figs. 9 and 10 upon receiving the weight of the food to be dispensed. The basket 68 thus is movable, under automatic control, from a position for receiving food to be fried (shown in Fig. 9) to the frying position (shown in Fig. 11) through an intermediate draining position (illustrated in dot and dash lines in Figs 10 and 11) to the food dispensing position (shown in solid lines in Fig. 10).

The counterweight or balance arrangement for opening and closing the door 69 of the chute 45 is illustrated in Fig. 12. It will be seen that the door 69 is mounted on a horizontally disposed and rotatable shaft 75. A stop member 79 on a shaft 80 journalled at one end 76 in a controlling means 77 limits the rotational motion of the shaft 75. Extending at a right angle to shaft 75 is another shaft or rod 76 with weights 77 and 78 which can be moved (as by means of threads) on the shaft 76 to adjust the weight which will suffice to open the trap-door 69. Arrows show the directions of relative rotation of the several shafts or rods.

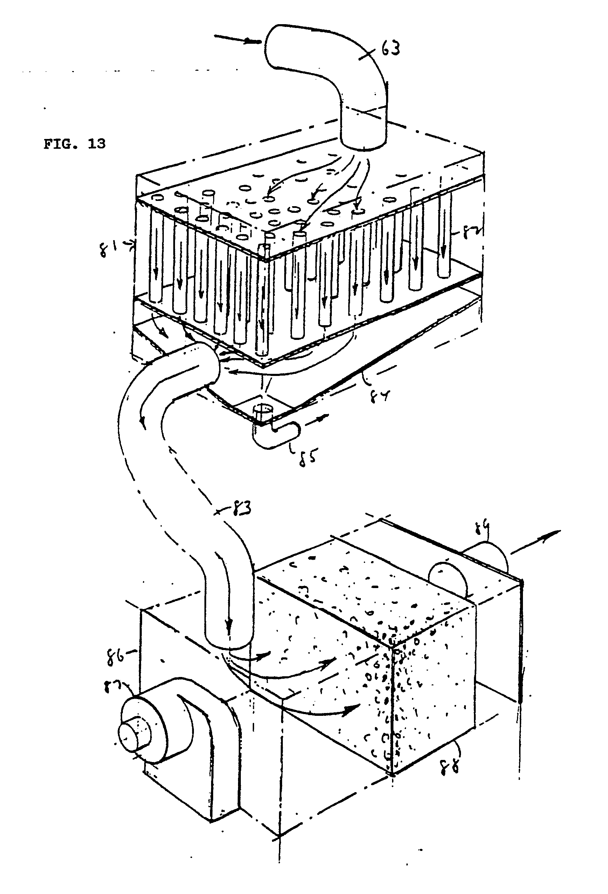

Fig. 13 shows the condenser and filter arrangement of the preferred embodiment of the invention. The conduit 63 leads moist, odorous air from the frying zone 25 to the condenser generally designated 81 whre the air is passed through heat exchange tubes 82 to exit through circuit 83. The air in tubes 82 is exposed to indirect heat exchange with a coolant medium, and liquid condensed from the air is gathered by the slanted condenser floor 84 to exit through drawin 85 to a container located within the housing 11 which is emptied when necessary by the person servicing the vending machine. Thus no steam is emitted from within the housing 11.

The air, from which moisture has been removed by passage through the codenser 81, then travels via conduit 83 to the filter 86 where it is forced by a pump 87 to pass through an activated carbon filter medium generally shown at 88, after which the dried and filtered air is exhausted as shown by the arrow in Fig. 13, through the duct 89.

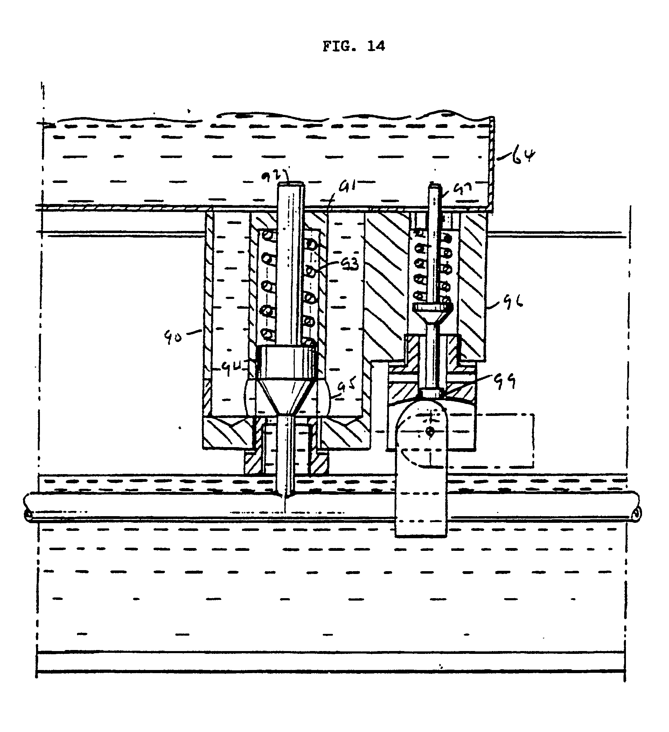

A valve arrangement for maintaining the oil level in the vessels 44 is shown in Fig. 14. The oil supply container 64 (see also Fig. 7) has a spout portion 90. An oil delivery valve 91 has a stem 92, a spring 93 normally under compression, and valve head 94 sized to close the surrounding widened passage 95 through which oil can flow when the valve is in the position shown in Fig. 14. The air relief valve 96 cooperates with the oil delivery valve 91. The valve 96 is a float valve which moves between the open and closed positions illustrated by dashed and solid lines in the figure. The valve 96 has a stem 97, a spring 98 which is normally compressed, and a valve head 99. The valves operate to maintain the desired oil level in the vessel 44.

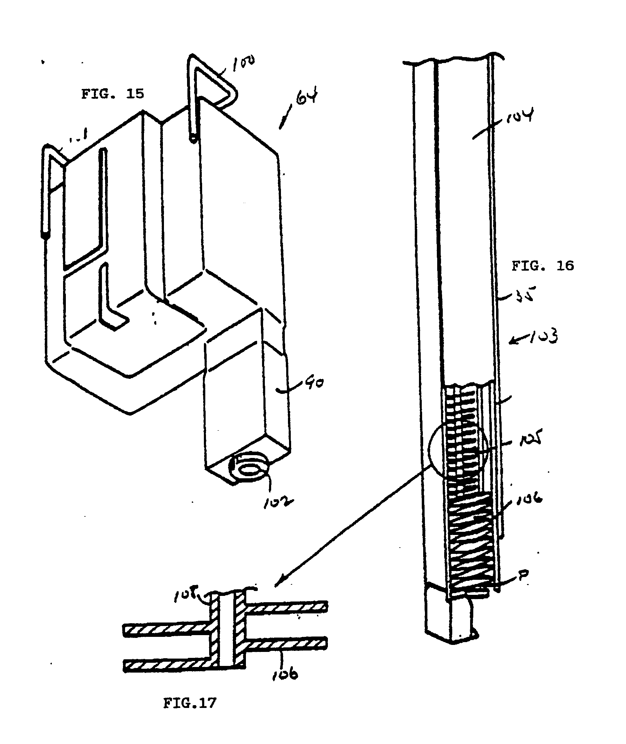

The oil container 64 of Fig. 8 is shown in the detail view of Fig. 15. Container 64 has handles 100, 101 which also serve as mounting brackets when the container 64 is in place with its spout 90 immersed in the oil in the vessel 44, so that oil can be released at vessel mouth 102.

The condiment dispenser 103 within housing 35 has a slidably opening front panel 104 permitting access for filling and a rotatable screw-like dispensing conveyor 105 which is shown in fragmentary detail in Fig. 17 to have staggered shelf-like projections 106 surrounding the vertically mounted spindle or stem 108. Individual packets P which can contain tomato catsup or the like move downward from shelf 106 to another shelf 106 as the step 108 is rotated.

The vending machine provides hot fried food, such as french fried potatoes by dipping the basket 41, into which the food has been delivered as described above, into the frying oil in the vessel 44, wherein the oil is kept at a suitable frying temperature of $160°$-$200°$ C. The heavy bottom (of brass or the like) of the vessel 44 serves as a heat reservoir, so the temperature is maintained at or about the desired level.

The thermostat probes 52 communicate temperature and temperature changes to the computer 27 and the resistance heaters 51 are activated accordingly.

The ease of access to various interior parts of the food vending machine of the invention distinguishes the invention from prior machines which have required skilled service personnel.

It will be understood to those acquainted with the art that various modifications, substitutions of parts and structural modifications will be possible wihout departing from the spirit and scope of the present invention, which provides a new and useful device for the preparation and dispensing of fried food products.

## Claims

1. A vending machine for automatically frying and dispensing fried food which comprises a housing having a front panel through which the fried food is dispensed; separate freezer and frying compartments within said housing; means for delivering measured quantities of food to be fried from said freezer compartment to said frying compartment, said freezer compartment having a front door and a forwardly movable drawer which can be moved forward to place food therein, and a screwlike conveyor for delivering food from said drawer to a chute leading to said frying compartment.

2. The machine of claim 1 wherein said frying compartment includes a movable basket for taking food from said chute into a frying vessel and removing the food from the vessel after frying, siad frying compartment having a means for sliding removal of the frying vessel therefrom.

3. The machine of claim 1 and including a dispenser for dispensing individual portions of condiments to accompany the fried food.

4. The machine of claim 1 wherein a counterweight and trap-door are provided for delivering said measured quantities of food to be fried.

5. The maching of claim 1 and including a frying vessel mounted for ready removal from said frying compartment, said frying vessel serving as a het reservoir to maintain an even frying temperature.

6. The machine of claim 1 wherein oil is metered to a frying vessel by an automatic valve.

7. The machine of claim 1 and including a basket for receiving food from said freezer, dipping said food for a measured length of time in hot oil in a frying vessel to fry the food, removing the fried food from said oil and allowing oil to drain from said food into said frying vessel, and delivering said fried food to a chute which leads to an alcove in the front panel.

8. The machine of claim 1, including means for drawing heated, moist air from the frying compartment to a condenser for removal of moisture from the air and means for passing the air after said condenser through a filter for removing odor therefrom.

9. The machine of claim 8 wherein the condenser is an indirect contact heat exchanger and the filter is an activated carbon filter.

10. The machine of claim 1 wherein there are two frying vessels for preparing two separate batches of food.

11. A fried food vending machine having a free standing housing with a front door which has alcoves for delivery of fried food, and in which the front panel can be swung open to reveal a space in which a freezer compartment is located above two frying vessels and means for dispensing food directly and automatically from the freezer to the frying vessels, the freezer having an insulated door behind which door there is a screw conveyor mechanism for feeding food to a pair of chutes which deliver the food to baskets mounted for pivoting movement of the food to and from the frying vessels and thence to a dispensing position in which fried food is dispensed into disposable receptacles; the machine including means for maintaining substantially constant level and temperature of frying oil in the frying vessels and balance means for assuring portion control, said freezer compartment comprising a slidably mounted drawer for access to the interior thereof and said screw conveyor means comprising a helical blade arrangement whereby the food is gently yet firmly moved to the chutes.

12. The machine of claim 11 wherein said frying vessels are mounted on tracks for sliding movement.

13. The machine of claim 11 and including removable oil containers with oil flow control valves.

14. The machine of claim 11 and including a screw dispenser for condiments.

15. The machine of claim 11 and including a vapor condenser and an activated carbon filter to cleanse air exhausted to the atmosphere.

16. The machine of claim 15 wherein said vapor condenser is an indirect contact heat exchanger and said filter is located downstream of said vapor condenser.

17. The machine of claim 11 and including baskets movable to and from frying positions by automatic control means.

18. The machine of claim 11 and including thermostat controls having probes for determining and maintaining constant temperature of frying oil.

19. The machine of claim 11 and including currency receiving means and change return means.

20. The machine of claim 11 wherein oil is heated by electric resistance heaters.

FIG. 1

FIG. 2

EP 0 380 816 A1

FIG. 3

FIG.4

EP 0 380 816 A1

FIG. 5

FIG. 6

FIG. 7

FIG. 8

FIG. 9

FIG. 10

EP 0 380 816 A1

FIG. 11

FIG. 12

EP 0 380 816 A1

FIG. 13

FIG. 14

FIG. 15

FIG. 16

FIG.17

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 597 319 (S.O.M.E.P.A.) <br> * Abstract; page 2, line 30 – page 4, line 24; page 6, line 6 – page 10, line 27; page 12, line 31 – page 13, line 10; claims 1-11; figures 1,2 * <br> --- | 1,2,11 | G 07 F 9/10 |
| D,X | US-A-4 586 429 (HAWKINS) <br> * Abstract; figures 1-6; column 2, line 51 – column 5, line 60; claims 1-11 * <br> --- | 1,2,7, 11,17, 20 | |
| A | US-A-3 690 247 (VAN CLEVEN et al.) <br> * Whole document * <br> --- | 1-20 | |
| A | US-A-4 748 902 (MAURANTONIO) <br> * Whole document * <br> --- | 1-9,11-18,20 | |
| D,A | US-A-4 502 372 (MARIOTTI) <br> * Abstract; figure 1; column 1, line 1 – column 4, line 65; claims 1-17 * <br> --- | 4-9,11-16 | |
| D,A | US-A-4 722 267 (GALOCKIN et al.) <br> * Abstract; figures 6-12; column 3, line 1 – column 4, line 54; claims 1-13 * <br> --- | 5,6,8,9 ,13,15, 16,18, 20 | TECHNICAL FIELDS SEARCHED (Int. Cl.4) <br><br> G 07 F <br> A 47 J |
| A | EP-A-0 234 996 (BEAUVALET) <br> * Abstract; page 2, line 15 – page 4, line 29; claims 1-10; figures 1,2 * <br> --- | 1,2,5,7 ,11,17, 20 | |
| D,A | US-A-4 457 947 (SCHMIDT et al.) <br> * Abstract; figures 1,8-17; column 4, line 30 – column 8, line 63; claims 1-6 * <br> ----- | | |

The present search report has been drawn up for all claims

| Place of search | Date of completion of the search | Examiner |
|---|---|---|
| THE HAGUE | 10-04-1989 | GUIVOL,O. |

EPO FORM 1503 03.82 (P0401)